# EUROPEAN PATENT APPLICATION

(11) **EP 1 865 209 A1**
(43) Date of publication of application: **12.12.2007**
(21) Application number: 05728460.6
(22) Date of filing: 16.03.2005
(51) Int. Cl.: F16B 7/18, F16S 3/08, E04B 1/58, E04B 1/19

(54) **NODE FOR RETICULATED STRUCTURES**

(71) Applicant: Montur Estan, S.L., 09006 Burgos (ES)
(72) Inventor: CARRACEDO PLANELLES, Juan, E-09006 BURGOS (ES)
(74) Representative: Carpintero Lopez, Francisco
(86) International application number: PCT/ES2005/000137
(87) International publication number: WO 2006/097545

(57) **Abstract**

The invention relates to a joint for grid frameworks. The joint comprises a core (1) having an outer surface (1'), in the form of a spherical cap, provided with radial holes (2), and a planar base (1 "), as well as a first assembly of bars (3) provided at their ends with threaded elements for their coupling in the radial holes (2). The joint additionally incorporates a second assembly of bars (7), with their ends flattened, assembled in a superimposed manner on the planar base (1") of the core (1), with the intermediation of a connection bushing (4, 5) formed by a cylindrical sector (6) that is slightly smaller than the diameter of holes (9) defined in the flattened ends of the second assembly of bars and by at least one conical sector (8) facilitating the penetration of the mentioned connection bushing (4, 5).

## Description

### OBJECT OF THE INVENTION

The present invention relates to a joint of the type forming metal grid frameworks, such as the case of those used in constructing roofs or the like.

The object of the invention is a joint the configuration of which allows it to adapt to the assembly needs of the grid framework, from simple solutions for assembling a small number of bars or more complex solutions which even allow assembling bars incorporating different connecting systems, all of this with a considerable weight and price reduction with respect to current solutions.

### BACKGROUND OF THE INVENTION

Joints form essential elements of metal grid frameworks and are used to connect the bars forming the framework. The joints must therefore have sufficient strength and allow transmitting stress, the frameworks being constructed with unions assembled with welding, bolts, screws and keys.

The most significant joints which are currently used for constructing grid frameworks are described below.

The Mero joint system consists of a core formed by a solid sphere provided with threaded holes in a radial direction to receive screw bolts integral with the bars of the framework. The bars consist of round tubes at the ends of which corresponding solid elements are welded, in which the screw bolt traversing the solid elements is introduced and is threaded in the corresponding hole of the core. This type of joint has an acceptable strength and its use is widely extended although it is a relatively expensive system.

In the Unistrut joint system, the core is formed by a central folded plate to which bars are connected by means of pins, in which the bars have the same length and can be placed in situ by non-specialized personnel.

The Triodetic joint system consists of a connecting process which does not use welding, screws or rivets, having a central core provided with notched grooves in which the flattened ends of bars with a tubular section are introduced under pressure.

The welded joint system consists of a spatial frame formed by octahedrons the edges of which are bars having a circular section which are welded to one another or to perforated steel spheres. This type of joint has a high rigidity because there is a continuity which can be considered perfect, however, it is not used in large projects due to its high labor cost.

The Sarton joints system incorporates bars with a circular section with flattened ends which are easily superimposed and have holes for placing a tie bolt. The bars must be superimposed with great precision such that the holes of the flattened ends coincide perfectly in order to introduce the bolt, which is very complicated and generally entails that the holes are made with a diameter that is considerably greater than the corresponding diameter of the tie bolts, which involves the existence of clearances and movements between the bars of the framework. It is a cost-effective method for connecting bars in a radial arrangement in one and the same plane but it is unsuitable for solving all the spatial connections required by the market, such as for example, connections of bars in a radial arrangement in different planes.

### DESCRIPTION OF THE INVENTION

The joint for grid frameworks forming the object of this invention proposes a highly flexible solution as regards the assembly of the bars, based on the incorporation of a core with a reduced weight and price, which allows coupling bars using complex or simple connecting systems but with the particularity that the obtained joint has good mechanical features in all the connections.

The joint of the invention specifically comprises a core having an outer surface, with a spherical cap shape and provided with radial holes and a planar base.

A first assembly of bars, provided at their ends with threaded rods or screw bolts, is coupled in the radial holes of the spherical cap, which bars are radially arranged in one and the same plane or in different planes, achieving a joint with a reduced weight and price but which allows obtaining good mechanical qualities in the bar connection. For simple grid frameworks, the planar base of the core is free, the connections being exclusively carried out through the spherical cap.

A second assembly of bars, with their ends flattened, is additionally assembled on the planar base of the core, the bars being superimposed on the planar base of the core through their flattened ends.

To carry out the connection between the flattened ends of the second assembly of bars and the planar base of the core, it has been provided that the core has a through hole in which a threaded screw is housed, which through hole has a smaller diameter than the hole of the core, on which there is coupled by threading a connection bushing having a widened base which is supported on the set of flattened ends of the second assembly of bars, remaining compressed on the planar base of the core.

The connection bushing is formed by a cylindrical sector and at least one conical area. The cylindrical sector has an outer diameter approximately coinciding with the diameter of the anchoring holes provided in the flattened ends of the bars, thus assuring good stress transmission in the connection due to the few clearances existing between the bushing and the bars.

The conical area of the connection bushing facilitates its introduction through the holes provided in the flattened ends of the bars, causing, as it is introduced, the self-alignment of the holes of the bars, to be finally coupled though its cylindrical sector which is fitted in the holes of the bars.

The joint of the invention thus has a more reduced price than a joint in which all the connections are carried out by screwing in the radial holes of the core, but a joint is also achieved which allows adapting to all the required spatial connections.

In other words, the joint of the invention has very good mechanical properties and a reduced price, making it valid for all types of grid frameworks.

The joint object of this invention also contemplates the additional incorporation of a closing body, in the form of a spherical cap, which is assembled on the set of flattened ends of the second assembly of bars. In this case, the connection bushing traversing the holes of the bars has two conical sectors at its respective ends, such that anchoring screws are introduced through its corresponding ends in its inner threaded borehole, which anchoring screws link each of the cores to the connection bushing, the flattened ends of the articulated bars around the connection bushing being located between both cores.

The closing body can also include a series of threaded holes, in a radial direction, for anchoring the radially extending bars so as to form a more complex grid framework.

### DESCRIPTION OF THE DRAWINGS

To complement the description which is being made and with the aim of aiding to better understand the features of the invention according to a preferred practical embodiment thereof, a set of drawings is attached as an integral part of said description, in which the following has been shown with an illustrative and non-limiting character:
Figure 1 shows a view of a joint for grid frameworks comprising a core, in the form of a spherical cap, and a first assembly of bars screwed in holes of the core, in a radial distribution.
Figure 2 shows an elevational view of a joint for grid frameworks comprising a core, in the form of a spherical cap, a first assembly of bars screwed in radial holes of the core and a second assembly of bars, with flattened ends, assembled on the planar base of the core.
Figure 3 shows an elevational view of the joint for grid frameworks contemplating the additional incorporation of a closing body, in the form of a spherical cap, which is assembled on the second assembly of bars.
Figure 4 shows an exploded view corresponding to the joint shown in Figure 2, with a detail of the hole of the flattened end of a bar.
Figure 5 shows an exploded view corresponding to the joint shown in Figure 3.
Figure 6 shows a partially sectioned view of the assembled joint, in which the bars anchored in the radial holes thereof have not been shown.
Figure 7 shows a partially sectioned view of the joint assembled with a core and closing body, in which the bars anchored in the radial holes thereof have not been shown.

### PREFERRED EMBODIMENT OF THE INVENTION

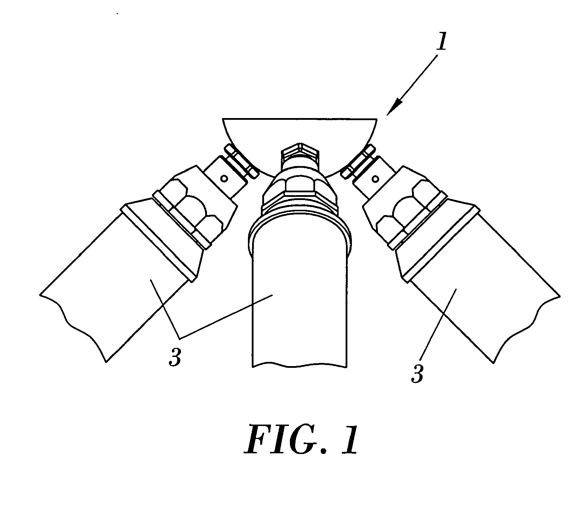

The joint for grid frameworks forming the object of this invention is formed by a core (1) having an outer surface (1'), in the form of a spherical cap, and a planar base (1 "), having a series of threaded radial holes (2) distributed throughout the outer surface (1') for coupling a first assembly of bars (3), provided at their ends with corresponding threaded elements. This joint is shown in Figure 1.

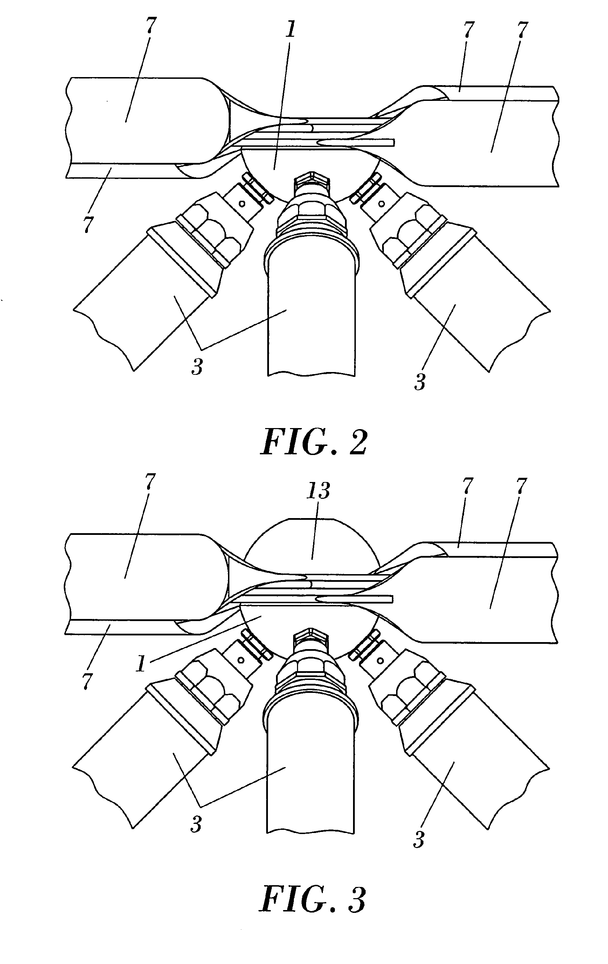

In Figure 2, a second assembly of bars (7), with their ends flattened, assembled in a superimposed manner on the planar base (1 ") of the core (1), has been incorporated to the joint.

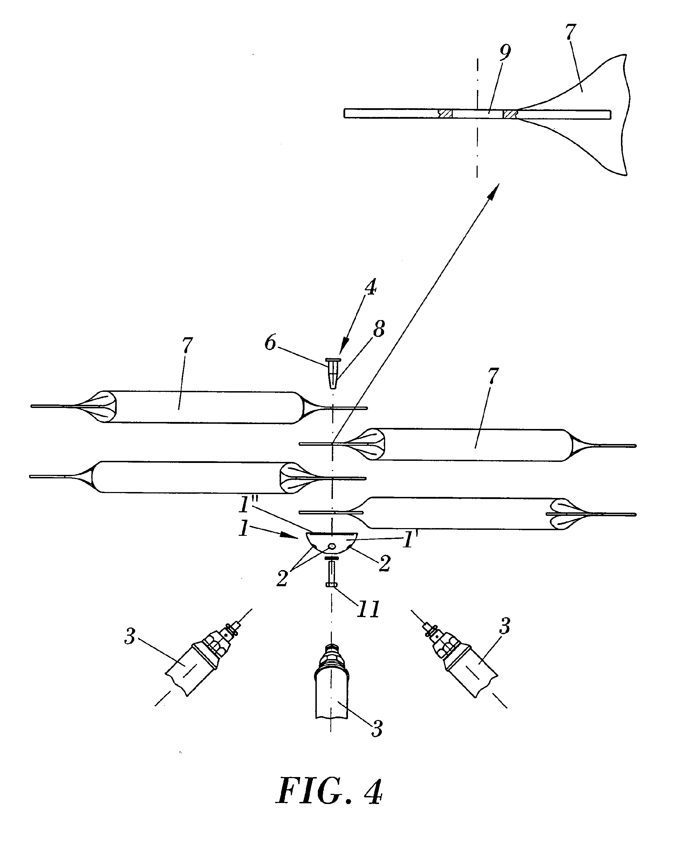

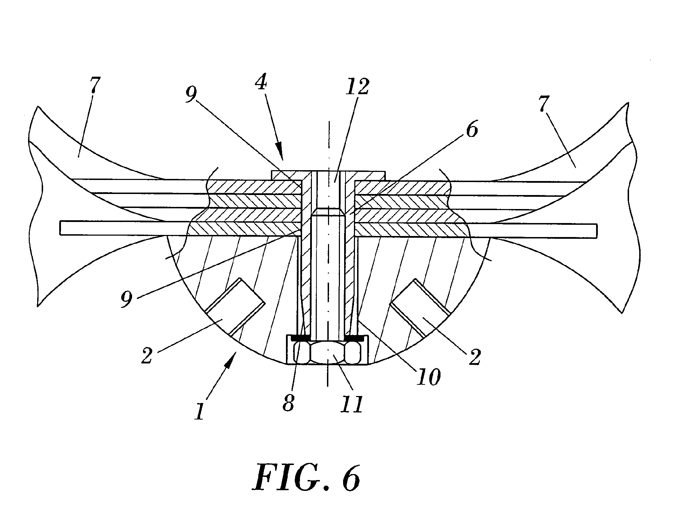

As can be observed in Figures 4 and 6, the joint also incorporates a connection bushing (4), formed by a cylindrical sector (6) with a diameter that is slightly smaller than the diameter of holes (9) defined in the flattened ends of the second assembly of bars (7) and by at least one conical sector (8) facilitating the penetration of the connection bushing (4) until the cylindrical sector (6) is fitted in said holes (9), forming a rigid link between the second assembly of bars (7).

As can be seen in Figure 6, the core (1) is provided with a through hole (10) for housing an anchoring screw (11), with a diameter that is considerably smaller than the diameter of the through hole (10) so as to allow the coupling between both of the connection bushing (4) threaded on the anchoring screw (11).

The connection bushing (4) has a widened base which is coupled under pressure against the set of flattened ends of the second assembly of bars (7) to prevent the axial movement of such ends.

Figure 4 shows an exploded view of the joint elements before the assembly, which is secured by screwing the anchoring screw (11) on the connection bushing (4) which has previously traversed the holes (9) of the flattened ends of the bars (7), and Figure 1 shows the result of the connection of these elements forming the joint.

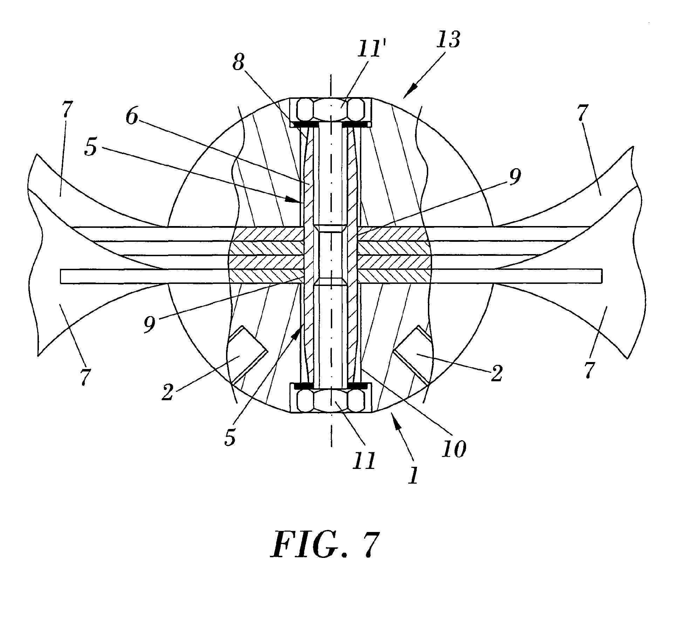

In another possible embodiment shown in Figures 3, 5 and 7, it is contemplated that the joint additionally incorporates a closing body (13), in the form of a spherical cap, arranged on the set formed by the planar ends of the second assembly of bars (7), this closing body (13) being able to have threaded radial holes (2) for assembling radial bars (3). In this case, the connection bushing (5) has two conical end sectors (8) and the closing body (13) is linked to the connection bushing (5) by an anchoring screw (11'), the flattened ends of the bars (7) being pressed between the core (1) and the body (13).

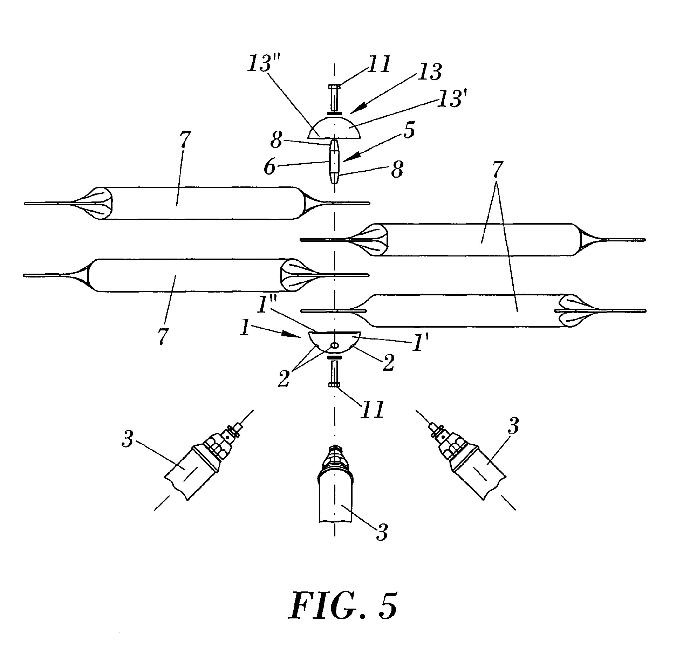

Figure 5 shows an exploded view of the joint elements corresponding to this alternative embodiment before the assembly, in which the core (1) and the closing body (13) are secured by screwing two anchoring screws (11)(11') on both ends of the connection bushing (5) which has previously traversed the holes (9) of the flattened ends of the bars (7), and Figure 3 shows the result of the connection of these elements forming the joint.

## Claims

1. A joint for grid frameworks comprising:
- A core (1) having an outer surface (1'), in the form of a spherical cap, provided with radial holes (2), and a planar base (1 "),
- A first assembly of bars (3), provided at their ends with threaded elements for their coupling in the radial holes (2).

2. A joint for grid frameworks according to claim 1, **characterized in that** it additionally comprises a second assembly of bars (7), with their ends being flattened, assembled in a superimposed manner on the planar base (1 ") of the core (1).

3. A joint for grid frameworks according to claim 1, **characterized in that** it additionally comprises a connection bushing (4, 5) formed by a cylindrical sector (6) with a diameter that is slightly smaller than the diameter of holes (9) defined in the flattened ends of the second assembly of bars (7) and by at least one conical sector (8) facilitating the penetration of the connection bushing (4, 5) until the cylindrical sector (6) is fitted in said holes (9), forming a rigid link between bars (7).

4. A joint for grid frameworks according to claim 2, **characterized in that** the connection bushing (4) has a widened base supported on the set formed by the flattened ends of the second assembly of bars (7).

5. A joint for grid frameworks according to claim 1, **characterized in that** it additionally comprises a first anchoring screw (11) housed in a through hole (10) of the core (1) and on which the connection bushing (4, 5), is threaded through an inner thread.

6. A joint for grid frameworks according to claim 1, **characterized in that** it additionally comprises a closing body (13) having an outer surface (13') in the form of a spherical cap, and a planar base (13") which is assembled on the set of flattened ends of the second assembly of bars (7) through its planar base (13"), with the particularity that the connection bushing (5) has two conical end sectors (8), the closing body (13) being linked to the connection bushing (5) by a second anchoring screw (11').

7. A joint for grid frameworks according to claim 6, **characterized in that** the closing body (13) is provided with threaded radial holes (2') for assembling radial bars (3).
